# EUROPÄISCHE PATENTSCHRIFT

(11) **EP 2 561 284 B1**
(45) Veröffentlichungstag und Bekanntmachung des Hinweises auf die Patenterteilung: **09.01.2019**
(21) Anmeldenummer: 11729248.2
(22) Anmeldetag: 20.04.2011
(51) Int. Cl.: F24F 13/02, F16L 23/14, E04F 17/04

(54) **FLANSCHPROFIL ZUM LUFTDICHTEN VERBINDEN VON LUFTKANALABSCHNITTEN EINES LUFTKANALS**
FLANGE PROFILE FOR THE AIR-TIGHT JOINING OF PORTIONS OF AN AIR DUCT
BRIDE PROFILÉE POUR RACCORDER DE MANIÈRE ÉTANCHE À L'AIR DES SEGMENTS D'UNE CANALISATION D'AIR

(30) Priorität: 05.08.2010 DE 202010011065 U; 23.04.2010 DE 202010006075 U
(43) Veröffentlichungstag der Anmeldung: 27.02.2013
(73) Patentinhaber: Hermanussen Metallverarbeitung GmbH, 59457 Werl (DE)
(72) Erfinder: DRAVENAU, Paul, 10119 Berlin (DE)
(74) Vertreter: Isfort, Olaf
(86) Internationale Anmeldenummer: PCT/EP2011/002003
(87) Internationale Veröffentlichungsnummer: WO 2011/131356

(56) Entgegenhaltungen:
- EP-A1- 0 088 149
- EP-A2- 0 069 920
- WO-A1-89/10512
- DE-A1- 3 436 825
- DE-A1- 3 618 822
- DE-A1- 4 303 150
- US-B1- 6 561 553

## Beschreibung

Die Erfindung betrifft ein Flanschprofil zum luftdichten Verbinden von zwei Luftkanalabschnitten eines Luftkanals, das als im Querschnitt im Wesentlichen L-förmiges Hohlprofil aus gefalztem Blech ausgebildet ist, wobei
- die L-Schenkel des Flanschprofils doppelwandig ausgebildet sind und jeweils eine Innenwandung und eine Außenwandung aufweisen,
- die Wandungen des ersten L-Schenkels eine endseitig offene Einstecktasche zum Einstecken der Wandung eines der Luftkanalabschnitte bilden,
- die Wandungen des zweiten L-Schenkels eine Aufnahmekammer zur Aufnahme eines Schenkels eines Eckwinkelstückes bilden.

Des Weiteren betrifft die Erfindung ein Verbindungssystem zum luftdichten Verbinden von zwei Luftkanalabschnitten eines im Querschnitt polygonal, insbesondere rechteckig, ausgebildeten Luftkanals, mit Flanschprofilen, die endseitig an den Wandungen der Luftkanalabschnitte befestigbar sind.

Ferner betrifft die Erfindung einen Luftkanal mit mehreren über Flanschprofile miteinander verbundenen Luftkanalabschnitten.

Der erste L-Schenkel des Flanschprofils erstreckt sich bei bestimmungsgemäßer Anordnung des Flanschprofils an der Wandung eines Luftkanalabschnittes im Wesentlichen parallel zu dieser Wandung. Der zweite L-Schenkel ist im Wesentlichen senkrecht zu der Wandung angeordnet. Die Begriffe "Innenwandung" und "Außenwandung" sind im Sinne der Erfindung so zu verstehen, dass nach dem Verbinden der Luftkanalabschnitte zu einem Luftkanal die Außenwandungen der L-Schenkel des Flanschprofils von außen zugänglich sind, während die Innenwandungen der L-Schenkel nicht zugänglich an oder in dem Luftkanal angeordnet sind. Dabei ist die Innenwandung des die Einstecktasche ausbildenden ersten L-Schenkels in dem Luftkanal und die Innenwandung des zweiten L-Schenkels im Wesentlichen in der Ebene der Trennfuge zwischen den miteinander verbundenen Luftkanalabschnitten angeordnet.

Um eine über die Flanschprofile herstellbare Verbindung zwischen zwei Luftkanalabschnitten hinreichend abzudichten, ist es bekannt, zwischen den beim Verbinden der Flanschprofile einander zugewandten Innenwandungen der zweiten L-Schenkel ein Dichtband, beispielsweise aus Neopren® oder ähnlichem, anzuordnen. Es hat sich jedoch gezeigt, dass eine derartige Abdichtung einer Verbindung von Luftkanalabschnitten nicht immer ausreichend ist und nicht den heutigen hohen Anforderungen an entsprechend ausgebildete Luftkanäle entspricht. Zum einen kann allein die Anordnung des Dichtbandes nicht den Austritt von in dem Luftkanal geführter Luft über die Verbindung der Luftkanalabschnitte zuverlässig verhindern, was insbesondere bei unter höherem Druck stehender Luft zu befürchten ist. Auf der anderen Seite kann nicht ausreichend sicher und dauerhaft verhindert werden, dass Kondenswasser, welches an der Innenwandung eines Luftkanals entstehen kann, im unteren Bereich über die Verbindung der Luftkanalabschnitte aus dem Luftkanal austritt.

Die WO 89/10512 A1 beschreibt ein Flanschprofil zur Verbindung von Luftkanalabschnitten, das einen Einrastmechanismus aufweist. Das bekannte Flanschprofil ist als L-förmiges Hohlprofil aus gefalztem Blech ausgebildet, wobei die Schenkel des Flanschprofils doppelwandig ausgebildet sind und jeweils eine Innenwandung und eine Außenwandung aufweisen. Einer der Schenkel des L-Profils weist eine endseitig offene Einstecktasche zum Einstecken der Wandung eines Luftkanalabschnitts auf. An dem in die Einstecktasche eingesteckten Abschnitt der Wandung des Luftkanalabschnitts ist ein Rastvorsprung vorgesehen, der in eine korrespondierende seitliche Aufnahmeöffnung der Einstecktasche, die durch Falzen der Außenwandung des Hohlprofils gebildet ist, eingreift. An der Unterseite des L-Profils ist eine integrierte Einrichtung zur Befestigung einer Luftkanalisolierung vorgesehen.

Hiervon ausgehend ist es die Aufgabe der Erfindung, ein Flanschprofil bereitzustellen, mit dem eine Verbindung zwischen Luftkanalabschnitten mit gegenüber dem Stand der Technik verbesserten Dichteigenschaften herstellbar ist.

Diese Aufgabe wird durch ein Flanschprofil der eingangs genannten Art erfindungsgemäß dadurch gelöst, dass an der Innenwandung des zweiten L-Schenkels wenigstens eine Sicke ausgebildet ist, die in Längserstreckung des Flanschprofils verläuft und von der Aufnahmekammer weg ragt.

Durch die erfindungsgemäße Ausgestaltung des Flanschprofils wird einerseits die zwischen der Innenwandung des zweiten L-Schenkels und einem Dichtband einer Verbindung von Luftkanalabschnitten vorhandene Kontaktfläche vergrößert. Des Weiteren ist der Anpressdruch des zweiten L-Schenkels an das Dichtband im Bereich der Sicke deutlich erhöht. Sowohl die vergrößerte Kontaktfläche, als auch der bereichsweise höhere Anpressdruck dienen der Schaffung einer wesentlich höheren Dichtheit einer entsprechend ausgebildeten Verbindung zwischen Luftkanalabschnitten. Hierdurch kann zuverlässig und dauerhaft verhindert werden, dass Luft oder Kondenswasser aus dem Luftkanal über die Verbindung von Luftkanalabschnitten in die Umgebung des Luftkanals austritt. Eine mit dem erfindungsgemäßen Flanschprofil herstellbare Verbindung von Luftkanalabschnitten erfüllt somit die Kriterien der höchsten Dichtheitsklassen C und D. Die Anzahl der jeweilig an der Innenwandung des zweiten L-Schenkels ausgebildeten Sicken lässt sich entsprechend den jeweiligen Anforderungen variieren, um eine gewünschte Dichtheit einer Verbindung von Luftkanalabschnitten sicherstellen zu können.

Die Ausbildung der wenigstens einen Sicke an der Innenwandung des zweiten L-Schenkels des Flanschprofils verbessert ferner die Stabilitätseigenschaften von letzterem. Hierdurch können die Innenwandungen der zweiten L-Schenkel von Flanschprofilen, zwischen denen ein Dichtband angeordnet ist, beim Herstellen einer Verbindung von Luftkanalabschnitten mit größeren Kräften gegeneinander gepresst werden, ohne dass es zu nennenswerten Deformationen der Innenwandungen der zweiten Schenkel der Flanschprofile kommt. Der höhere Anpressdruck dient der Schaffung einer Verbindung von Luftkanalabschnitten mit verbesserten Abdichteigenschaften. Das Vermeiden des Auftretens von die Dichtheit der Verbindung gefährdenden Deformationen der Innenwandungen der zweiten L-Schenkel der Flanschprofile, welche bei herkömmlichen Flanschprofilen ohne erfindungsgemäße Sicke unweigerlich bei dem hohen Anpressdruck auftreten würden, dient ebenso der Schaffung einer Verbindung von Luftkanalabschnitten mit besten Abdichteigenschaften.

Gemäß einer vorteilhaften Ausgestaltung der Erfindung ist die Sicke im Querschnitt spitz (z.B. dreieckig) ausgebildet. Hierdurch wird im Bereich der Spitze der Sicke ein maximaler Anpressdruck erzeugt, um die mit der Erfindung erzielbaren Vorteile effektiv herbeizuführen. Zwar sind auch andere Querschnittsformen für die Sicke möglich, wie beispielsweise eine abgerundete oder ähnliches, die besten Dichteigenschaften lassen sich jedoch mit der spitzen Ausgestaltung der Sicke erzielen. Bei der Anordnung von mehreren Sicken an der Innenwandung des zweiten L-Schenkels, ist es möglich, die verschiedenen Sicken mit unterschiedlichen Querschnittsformen zu versehen.

Bei einer bevorzugten Ausgestaltung ist vorgesehen, dass zwischen den Wandungen des ersten Schenkels ein entlang der Längserstreckung des Flanschprofils verlaufender, im Inneren der Einstecktasche im Bereich der Einstecköffnung der Einstecktasche angeordneter Dichtmittelstrang vorhanden ist. Der Dichtmittelstrang ist also in einem Bereich des Flanschprofils angeordnet, welcher durch die beim Verbinden des Flanschprofils mit einem Luftkanalabschnitt durch Verschweißen oder mittels einer Druckfügetechnik auftretenden Verformungen des Flanschprofils weitestgehend unbeeinflusst ist, so dass die durch den Dichtmittelstrang gegebene Dichtwirkung auch nach dem Verbinden von Flanschprofil und Luftkanalabschnitt uneingeschränkt erhalten bleibt. Gemäß dieser Ausgestaltung der Erfindung wird somit ein Flanschprofil zum luftdichten Verbinden von zwei Luftkanalabschnitten eines Luftkanals bereitgestellt, welches gegenüber herkömmlichen Flanschprofilen deutlich bessere Abdichteigenschaften aufweist. Aus dem Stand der Technik, wie beispielsweise aus DE 43 03 150 A1, ist es hingegen bekannt, einen Dichtmittelstrang in einem Bereich des Flanschprofils anzuordnen, welcher durch beim Verbinden des Flanschprofils mit einem Luftkanalabschnitt mittels Verschweißen oder einer Druckfügetechnik auftretende Verformungen des Flanschprofils beeinflusst wird, so dass nicht immer zuverlässig eine gewünschte weitestgehende Dichtigkeit des Flanschprofils beziehungsweise einer damit ausgestatteten Verbindung von Luftkanalabschnitten hergestellt werden kann. Insbesondere bei Anwendung der Druckfügetechnik (auch als "Verclinchen" bezeichnet), kommt es regelmäßig zu kleineren oder größeren Perforationen des Blechmaterials im Bereich der Einstecköffnung des Flanschprofils. Diese Perforationen führen zu unerwünschten Undichtigkeiten bei den herkömmlichen Flanschprofilen. Dieses wird durch die vorgeschlagene Anordnung des Dichtmittelstrangs im Bereich der Einstecköffnung der Einstecktasche zuverlässig vermieden.

Beim Einstecken der Wandung des Luftkanalabschnittes in die Einstecktasche benetzt vorteilhaft ein Teil des Dichtmittels des Dichtmittelstrangs die Wandung des Luftkanalabschnitts, und zwar in der Weise, dass sich ein Dichtmittelfilm um die schließlich in der Einstecktasche befindliche Wandung des Luftkanalabschnitts herum legt. Beim Einführen der Wandung des Luftkanalabschnitts in die Einstecköffnung kommt die vordere Kante der Wandung zunächst mit dem Dichtmittelstrang in Kontakt und wird bis zum vollständigen Einstecken an dem (vorzugsweise pastösen oder zäh viskosen) Dichtmittelstrang entlang geführt. Vorteilhaft legt sich dabei der Dichtmittelfilm um die in die Einstecköffnung eingeführte Kante der Wandung des Luftkanalabschnitts. Dieser Film bewirkt zum Einen eine großflächige Abdichtung. Zum Anderen sorgt der Film dafür, dass selbst in dem Fall, dass das Flanschprofil bei der Verbindung mit der Luftkanalwandung mittels Druckfügetechnik durch Verformung lokal perforiert wird, immer noch eine ausreichende Dichtigkeit gegeben ist. Die eventuell auftretenden Perforationsstellen werden durch das Dichtmittel, mit dem die Luftkanalwandung benetzt ist, abgedichtet.

Bei einer bevorzugten Ausgestaltung des Flanschprofils ist vorgesehen, dass der zweite L-Schenkel an seiner der Trennfuge zwischen den Luftkanalabschnitten zugewandten Innenwandung einen entlang der Längserstreckung des Flanschprofils verlaufenden, in das Innere des Hohlprofils hinein bis an die Außenwandung des zweiten L-Schenkels heran ragenden Wulstfalz aufweist, der die Wandung des Luftkanalabschnitts bei ihrem Einstecken in die Einstecktasche führt und einen Scheitel aufweist. Dies entspricht im Wesentlichen der Ausgestaltung des Flanschprofil gemäß der oben erwähnten DE 43 03 150 A1.

Gemäß einer weiteren vorteilhaften Ausgestaltung der Erfindung ist an der Innenwandung des ersten L-Schenkels im Bereich der Einstecköffnung der Einstecktasche eine in das Innere des Luftkanals ragende Sicke ausgebildet, die den Dichtmittelstrang zumindest teilweise aufnimmt. Hierdurch kann eine größere Menge Dichtmittel im gewünschten Bereich der Einstecköffnung der Einstecktasche angeordnet werden, wodurch die Abdichteigenschaften des Flanschprofils weiter verbessert werden. Zudem wird der Dichtmittelstrang durch seine Anordnung in der Sicke beim Einstecken der Wandung eines Luftkanalabschnitts in die Einstecktasche besser an seiner optimalen Position gehalten. Ferner hat die Sicke eine stabilisierende Wirkung und dient somit zur Erhöhung der Formsteifigkeit eines damit versehenen Flanschprofils.

Nach einer weiteren vorteilhaften Ausgestaltung der Erfindung ist der Dichtmittelstrang durch Einstecken der Wandung des Luftkanalabschnittes in die Einstecktasche teilbar, in der Weise, dass ein Teil des Dichtmittels in den Spalt zwischen der Innenwandung des ersten Schenkels und der Wandung des Luftkanalabschnitts und ein anderer Teil des Dichtmittels in den Spalt zwischen der Außenwandung des ersten Schenkels und der Wandung des Luftkanalabschnittes gepresst wird, wobei diese Teile des Dichtmittels die jeweilige Spalte zumindest teilweise ausfüllen. Hierdurch erfolgt eine optimale Abdichtung des Flanschprofils, indem zum einen durch den Teil des Dichtmittels in dem Spalt zwischen der Innenwandung des ersten Schenkels und der Wandung des Luftkanalabschnitts das Eintreten von in dem Luftkanal geführter Luft in das Flanschprofil und zum anderen durch den anderer Teil des Dichtmittels in dem Spalt zwischen der Außenwandung des ersten Schenkels und der Wandung des Luftkanalabschnittes der Austritt von eventuell doch in das Flanschprofil eingetretener Luft aus dem Flanschprofil heraus in die Umgebung des Luftkanals verhindert wird.

Es wird des Weiteren als vorteilhaft erachtet, wenn das Dichtmittel des Dichtmittelstranges klebend ist. Diese Ausgestaltung der Erfindung dient insbesondere der Lagesicherung des Flanschprofils an der Wandung des Luftkanalabschnittes vor dem Verbinden von Flanschprofil und Wandung. Des Weiteren können so die Wandungen des ersten L-Schenkels mit der Wandung des Luftkanalabschnitts fest verbunden werden, wodurch die Formstabilität des Flanschprofils weiter verbessert wird.

Eine weitere vorteilhafte Ausgestaltung der Erfindung sieht vor, dass die Außenwandung des zweiten L-Schenkels im Übergangsbereich zu der Außenwandung des ersten L-Schenkels einen Zwischenabschnitt mit zu dem Wulstfalz komplementärer, nach außen gewölbter und gerundeter Form hat, wobei das Flanschprofil nach dem Verbinden mit einer in die Einstecktasche eingesteckten Wandung des Luftkanalabschnittes in der Weise verformt ist, dass der Scheitel des Wulstfalzes an die Außenwandung des zweiten L-Schenkels im Bereich des Zwischenabschnittes flächig angepresst wird. Hierdurch werden die Stabilitätseigenschaften sowie die Abdichteigenschaften des Flanschprofils weiter deutlich verbessert. Bei dem Flanschprofil gemäß DE 43 03 150 A1 wirken die Außenwandungen der L-Schenkel nach dem Verbinden des Flanschprofils mit einem Luftkanalabschnitt durch Verschweißen oder mittels einer Druckfügetechnik nicht mit den Innenwandungen der L-Schenkel zusammen. Sie sind lediglich über die elastische Dichtmasse miteinander verbunden. Wirkt eine Kraft auf einen Teil des Flanschprofils ein, so kann diese Kraft nicht auf andere Teile des Flanschprofils übertragen werden, sondern führt zu ungewünschten Deformationen des Flanschprofils sowohl im elastischen als auch im plastischen Bereich. Nach dieser Ausgestaltung der Erfindung ist hingegen ein Zwischenabschnitt vorgesehen, welcher bei bestimmungsgemäßer Anordnung des Flanschprofils an dem Luftkanalabschnitt an dem Scheitel des Wulstfalzes anliegt, um so die Stabilität und auch die Dichtwirkung des Flanschprofils zu verbessern. Diese Konfiguration nimmt das Flanschprofil insbesondere dann ein, wenn es nach dem Einstecken der Wandung des Luftkanalabschnitts in die Einstecktasche mit der Wandung (z.B. durch Punktschweißen oder durch eine Druckfügetechnik) verbunden wird. Das Flanschprofil ist nach dem Verbinden mit der Wandung des Luftkanalabschnittes in der Weise verformt, dass der Scheitel des Wulstfalzes an die Außenwandung des zweiten L-Schenkels im Bereich des Zwischenabschnittes flächig angepresst wird. Hierdurch wird die Stabilität und Dichtwirkung des Flanschprofils deutlich verbessert. Kräfte, die auf einen Teil des Flanschprofils einwirken, können effektiv auf weitere Teile des Flanschprofils übertragen werden, ohne dass es hierbei zu nennenswerten Deformationen des Flanschprofils kommt.

Nach einer weiteren vorteilhaften Ausgestaltung der Erfindung ist in dem Hohlraum des Flanschprofils ein entlang der Längserstreckung des Flanschprofils verlaufender, im Inneren der Einstecktasche im Bereich des Scheitels des Wulstfalzes angeordneter weiterer Dichtmittelstrang vorhanden. Der weitere Dichtmittelstrang ist somit im Inneren der Einstecktasche angeordnet, und nicht, wie aus dem Stand der Technik bekannt, zwischen dem Scheitel des Wulstfalzes und der Außenwandung des zweiten L-Schenkels. Diese Anordnung des weiteren Dichtmittelstranges erzeugt nicht nur eine Abdichtung der Aufnahmekammer des Eckwinkelstücks gegenüber der Einstecktasche des Flanschprofils, sondern auch eine Abdichtung des Spalts zwischen der Innenwandung des ersten L-Schenkels und der in die Einstecktasche eingesteckten Wandung des Luftkanalabschnittes. Hierdurch wird das Austreten von Luft aus dem Luftkanal über das Flanschprofil reduziert. Zudem wird durch die Anordnung der Dichtmasse zwischen dem Scheitel des Wulstfalzes, dem Zwischenabschnitt und der in die Einstecktasche eingesteckten Wandung dem Flanschprofil eine sehr hohe Formstabilität verliehen. Das Flanschprofil weist somit sehr gute Stabilitätseigenschaften auf, die mit Flanschprofilen des Standes der Technik nicht erreicht werden können.

Die aus dem Stand der Technik, wie beispielsweise DE 43 03 150 A1, bekannte Anordnung der elastischen Dichtmasse zwischen dem Scheitel des Wulstfalzes und der Außenwandung des zweiten L-Schenkels ist nachteilig, da hierdurch lediglich eine Abdichtung der zur Aufnahme des Eckwinkelstücks zwischen den Wandungen des zweiten L-Schenkels vorgesehenen Aufnahmekammer gegenüber der durch den ersten L-Schenkel ausgebildeten Einstecktasche gegeben ist. Bei dieser Art der Abdichtung kann es vorkommen, dass durch den Luftkanal geführte Luft durch den Spalt zwischen der Innenwandung des ersten L-Schenkels und der in die Einstecktasche eingesteckten Wandung des Luftkanalabschnittes und von dort über den Spalt zwischen der Außenwandung des ersten L-Schenkels des Flanschprofils und der in die Einstecktasche eingesteckten Wandung des Luftkanalabschnittes in die Umgebung gelangt. In Anbetracht der heutigen Qualitäts- und Sicherheitsanforderungen an Luftkanäle, insbesondere solchen von luftführenden Hochdruckanlagen, in der Reinraumtechnik oder im Krankenhausbereich, ist eine derartige Ausgestaltung hinsichtlich der Dichtigkeit nicht zufrieden stellend.

Gemäß einer weiteren vorteilhaften Ausgestaltung der Erfindung ist an der Innenwandung des ersten L-Schenkels auf Höhe des Scheitels des Wulstfalzes eine in das Innere des Luftkanals ragende Sicke ausgebildet, die den weiteren Dichtmittelstrang zumindest teilweise aufnimmt. Diese Ausgestaltung des Flanschprofils dient dazu, die Position des weiteren Dichtmittelstranges, insbesondere beim Einstecken der Wandung des Luftkanals in die Einstecktasche, zu sichern. Die Sicke hat zudem eine stabilisierende Wirkung und dient somit zur Erhöhung der Formsteifigkeit eines damit versehenen Flanschprofils.

Eine weitere vorteilhafte Ausgestaltung der Erfindung sieht vor, dass der weitere Dichtmittelstrang durch Einstecken der Wandung des Luftkanalabschnittes in die Einstecktasche teilbar ist, in der Weise, dass ein Teil des Dichtmittels in den Spalt zwischen dem Scheitel des Wulstfalzes und der Außenwandung des zweiten L-Schenkels gepresst wird und ein anderer Teil des Dichtmittels den Spalt zwischen der Wandung des Luftkanalabschnittes und der Innenwandung des ersten L-Schenkels zumindest teilweise ausfüllt. Auf diese Weise sind sämtliche Bereiche des Profils gegeneinander zuverlässig abgedichtet.

In einer vorteilhaften Ausführungsform der Erfindung ist das Dichtmittel des weiteren Dichtmittelstranges klebend. Dieses dient ebenso der Lagesicherung des Flanschprofils an der Wandung des Luftkanalabschnittes vor dem Verbinden von Flanschprofil und Wandung. Des Weiteren können so der Scheitel des Wulstfalzes, der Zwischenabschnitt und die in die Einstecktasche eingesteckte Wandung miteinander verklebt werden, was die Formstabilität des Flanschprofils verbessert.

Das erfindungsgemäße Flanschprofil erfüllt somit ohne weiteres die Kriterien der Dichtheitsklassen C und D.

Aufgabe der Erfindung ist es des Weiteren, ein Verbindungssystem zum luftdichten Verbinden von zwei Luftkanalabschnitten eines im Querschnitt polygonal, insbesondere rechteckig, ausgebildeten Luftkanals bereitzustellen, welches gegenüber herkömmlichen Verbindungssystemen deutlich bessere Stabilitäts- und Abdichteigenschaften aufweist.

Diese Aufgabe wird durch ein Verbindungssystem der eingangs genannten Art erfindungsgemäß dadurch gelöst, dass wenigstens eines der Flanschprofile nach einer der vorgenannten Ausgestaltungen der Erfindung oder einer beliebigen Kombination derselben ausgebildet ist. Alle Komponenten des Verbindungssystems und somit das Verbindungssystem selbst erfüllen die Kriterien der Dichtheitsklassen C und D.

Ein solches Verbindungssystem weist vorzugsweise mehrere Flanschprofile nach einer der obigen Ausgestaltungen oder einer beliebigen Kombination derselben auf. Vorteilhafterweise sind nur die Flanschprofile des Verbindungssystems, welche mit einem der beiden Luftkanalabschnitte verbunden sind, jeweils mit wenigstens einer an der Innenwandung des zweiten L-Schenkels ausgebildeten Sicke ausgestattet. Sollen auch die Flanschprofile, welche mit dem anderen Luftkanalabschnitt verbunden sind, jeweils mit wenigstens einer an der Innenwandung des zweiten L-Schenkels ausgebildeten Sicke ausgestattet sein, sind die Sicken von den Flanschprofilen, zwischen denen ein Dichtband angeordnet ist, bevorzugt quer zur Längserstreckung der Flanschprofile versetzt zueinander angeordnet.

Ferner wird mit der Erfindung ein Luftkanal der eingangs genannten Art vorgeschlagen, bei dem erfindungsgemäß wenigstens ein Flanschprofil gemäß einer der vorbeschriebenen Ausgestaltungen der Erfindung oder einer beliebigen Kombination derselben ausgestaltet ist. Auch ein solcher Luftkanal erfüllt damit die Kriterien der Dichtheitsklassen C und D.

Weitere Vorteile und Merkmale der vorliegenden Erfindung werden im Folgenden anhand der in den Figuren gezeigten Ausführungsbeispiele näher erläutert. Dabei zeigen:
- Figur 1:: Querschnitt eines ersten Ausführungsbeispiels des erfindungsgemäßen Flanschprofils,
- Figur 2:: Querschnitt eines zweiten Ausführungsbeispiels des erfindungsgemäßen Flanschprofils,
- Figur 3:: Querschnitt eines dritten Ausführungsbeispiels des erfindungsgemäßen Flanschprofils, und
- Figur 4:: Querschnitt eines vierten Ausführungsbeispiels des erfindungsgemäßen Flanschprofils.

Die in den Figuren gezeigten Ausführungsbeispiele für das erfindungsgemäße Flanschprofil sind schematische Darstellung. Die jeweiligen Längen und Dicken der einzelnen Komponenten des Flanschprofils sind an den gewünschten Einsatzzweck ebenso anpassbar wie die verschiedenen zwischen einzelnen Komponenten eingeschlossenen Winkel.

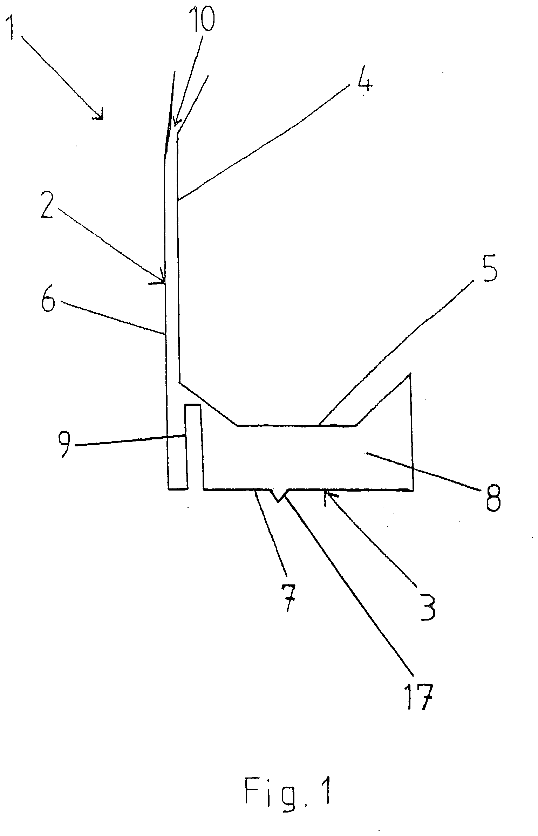

Figur 1 zeigt einen Querschnitt eines ersten Ausführungsbeispiels des erfindungsgemäßen Flanschprofils 1 zum luftdichten Verbinden von zwei Luftkanalabschnitten eines Luftkanals. Das Flanschprofil 1 ist als im Querschnitt im Wesentlichen L-förmiges Hohlprofil aus gefalztem Blech ausgebildet. Die L-Schenkel 2 und 3 des Flanschprofils 1 sind doppelwandig ausgebildet. Die L-Schenkel 2 und 3 weisen jeweils eine Innenwandung 6 bzw. 7 und eine Außenwandung 4 bzw. 5 auf. Die Wandungen 4 und 6 des ersten L-Schenkels 2 bilden eine endseitig offene Einstecktasche zum Einstecken der Wandung eines nicht dargestellten Luftkanalabschnittes aus. Die Wandungen 5 und 7 des zweiten L-Schenkels 3 bilden eine Aufnahmekammer 8 zur Aufnahme eines nicht dargestellten Schenkels eines Eckwinkelstückes aus. Der zweite L-Schenkel 3 weist an seiner Innenwandung 7 einen entlang der Längserstreckung des Flanschprofils 1 verlaufenden, in das Innere des Hohlprofils hinein bis an die Außenwandung 5 heranragenden Wulstfalz 9 auf. Dieser dient zur Führung der Wandung des Luftkanalabschnitts beim Einstecken in die Einstecktasche. An der Innenwandung 7 des zweiten L-Schenkels 3 ist eine Sicke 17 ausgebildet, die in Längserstreckung des Flanschprofils 1 verläuft und von der Aufnahmekammer 8 weg ragt. Dieses ist mit den erfindungsgemäßen, oben genannten Vorteilen verbunden.

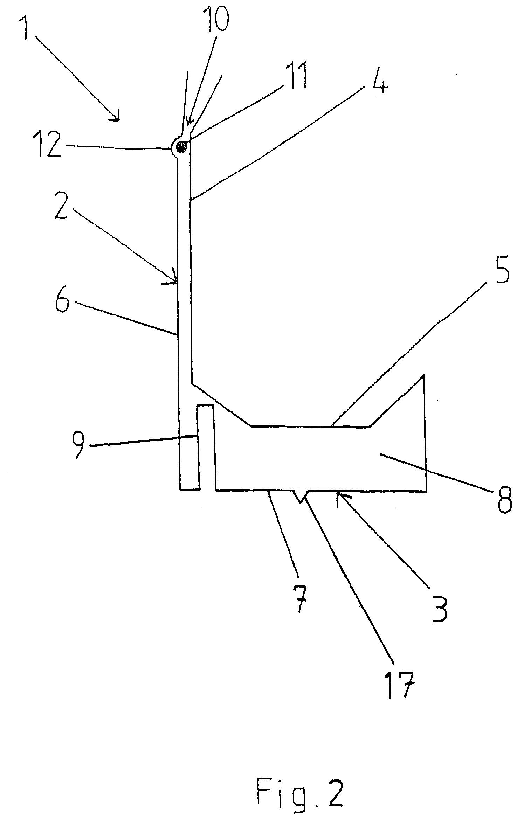

Figur 2 zeigt ein zweites Ausführungsbeispiel für das erfindungsgemäße Flanschprofil 1. Das Flanschprofil 1 der Figur 2 unterscheidet sich dadurch von dem der Figur 1, dass in dem Hohlraum des Flanschprofils 1 ein entlang der Längserstreckung des Flanschprofils 1 verlaufender, im Inneren der Einstecktasche im Bereich der Einstecköffnung 10 der Einstecktasche angeordneter Dichtmittelstrang 11 vorhanden ist. An der Innenwandung 6 des ersten L-Schenkels 2 ist im Bereich der Einstecköffnung 10 der Einstecktasche eine in das Innere des Luftkanals ragende Sicke 12 ausgebildet ist, die den Dichtmittelstrang 11 zumindest teilweise aufnimmt.

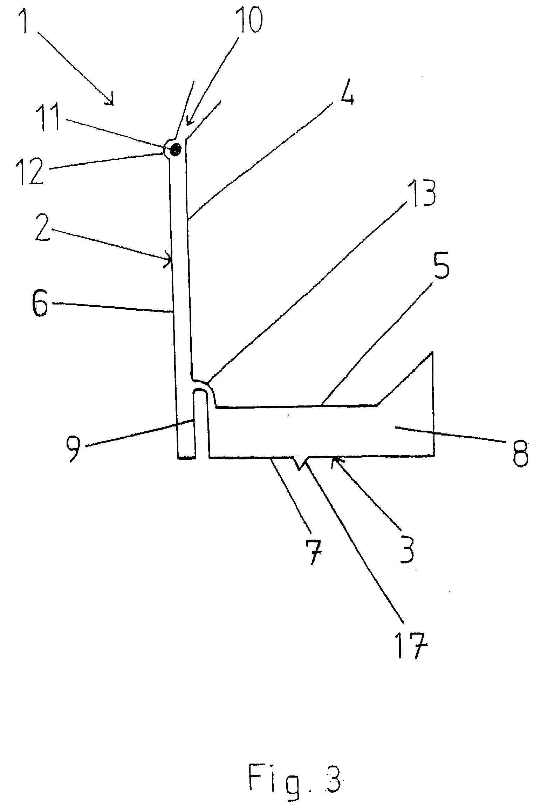

Figur 3 zeigt ein drittes Ausführungsbeispiel für das erfindungsgemäße Flanschprofil 1, welches gegenüber der in Figur 2 gezeigten zweiten Ausführungsform verbesserte Stabilitäts- und Abdichteigenschaften aufweist. Die dritte Ausführungsform unterscheidet sich von der zweiten dadurch, dass die Außenwandung 5 des zweiten L-Schenkels 3 in dem Übergangsbereich zur Außenwandung 4 des ersten L-Schenkels 2 einen Zwischenabschnitt 13 mit zu dem Wulstfalz 9 komplementärer, nach außen gewölbter und gerundeter Form aufweist. Nach dem Verbinden des Flanschprofils 1 mit einem nicht dargestellten Luftkanalabschnitt kann der Wulstfalz 9 mit dem Zwischenabschnitt 13 derart zusammenwirken, dass das Flanschprofil 1 weitestgehend gegen Deformationen bei Krafteinwirkung geschützt ist. Solche Deformationen würden sich auch nachteilig auch die Dichtwirkung des Flanschprofils 1 auswirken können.

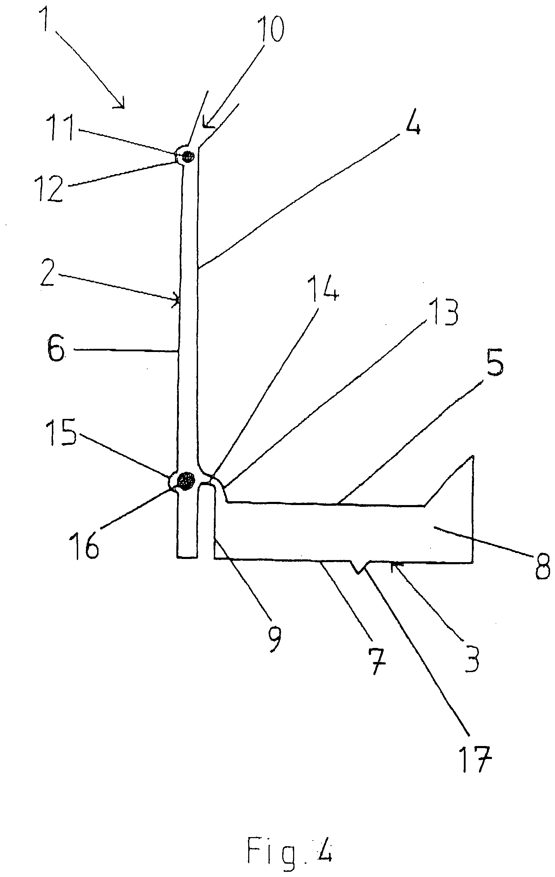

Figur 4 zeigt ein viertes Ausführungsbeispiel für das erfindungsgemäße Flanschprofil 1, dessen Stabilitäts- und Abdichteigenschaften gegenüber dem Ausführungsbeispiel von Figur 3 weiter verbessert sind. Diese Ausführungsform unterscheidet sich von der in Figur 3 gezeigten dadurch, dass an der Innenwandung 6 des ersten L-Schenkels 2 auf Höhe des Scheitels 14 des Wulstfalzes 9 eine in das Innere des (nicht dargestellten) Luftkanals ragende Sicke 15 ausgebildet ist, die einen weiteren Dichtmittelstrang 16 zumindest teilweise aufnimmt.

Beim Einführen der Wandung des Luftkanalabschnitts in die Einstecköffnung 10 kommt die vordere Kante der Wandung zunächst mit dem Dichtmittelstrang 11 in Kontakt und wird bis zum vollständigen Einstecken an dem aus pastösem oder zäh viskosem Material bestehenden Dichtmittelstrang 11 entlang geführt. Dabei legt sich ein Dichtmittelfilm um die durch die Einstecköffnung 10 eingeführte Kante der Wandung des Luftkanalabschnitts. Nach dem vollständigen Einführen der Luftkanalwandung zwischen die Profilwandungen 4 und 6 wird das Flanschprofil 1 mit der Wandung mittels Druckfügetechnik verbunden ("verclincht"). Diese Verbindung findet in dem Bereich zwischen den beiden Sicken 12 und 15 statt. In diesem Bereich können die Wandungen 4 und 6 durch Verformung lokal perforiert werden. Der um die vordere Kante der Luftkanalwandung gelegte Dichtmittelfilm bewirkt nun, dass immer noch eine ausreichende Dichtigkeit gegeben ist. Die auftretenden Perforationsstellen in dem Bereich zwischen den Sicken 12 und 15 werden durch das Dichtmittel, mit dem die Luftkanalwandung benetzt ist, abgedichtet.

## Patentansprüche

1. Flanschprofil (1) zum luftdichten Verbinden von zwei Luftkanalabschnitten eines Luftkanals, das als im Querschnitt im Wesentlichen L-förmiges Hohlprofil aus gefalztem Blech ausgebildet ist, wobei
- die L-Schenkel (2, 3) des Flanschprofils (1) doppelwandig ausgebildet sind und jeweils eine Innenwandung (4, 5) und eine Außenwandung (6, 7) aufweisen,
- die Wandungen (4, 6) des ersten L-Schenkels (2) eine endseitig offene Einstecktasche zum Einstecken der Wandung eines der Luftkanalabschnitte bilden,
- die Wandungen (5, 7) des zweiten L-Schenkels (3) eine Aufnahmekammer (8) zur Aufnahme eines Schenkels eines Eckwinkelstückes bilden,
**dadurch gekennzeichnet, dass** an der Innenwandung (7) des zweiten L-Schenkels (3) wenigstens eine Sicke (17) ausgebildet ist, die in Längserstreckung des Flanschprofils (1) verläuft und von der Aufnahmekammer (8) weg ragt.

2. Flanschprofil (1) nach Anspruch 1, **dadurch gekennzeichnet, dass** die Sicke (17) im Querschnitt spitz ausgebildet ist.

3. Flanschprofil (1) nach Anspruch 1 oder 2, **dadurch gekennzeichnet, dass** zwischen den Wandungen (4, 6) des ersten L-Schenkels (2) ein entlang der Längserstreckung des Flanschprofils (1) verlaufender, im Inneren der Einstecktasche im Bereich der Einstecköffnung (10) der Einstecktasche angeordneter Dichtmittelstrang (11) vorhanden ist.

4. Flanschprofil nach einem der vorhergehenden Ansprüche, **dadurch gekennzeichnet, dass** der zweite L-Schenkel (3) an seiner der Trennfuge zwischen den Luftkanalabschnitten zugewandten Innenwandung (7) einen entlang der Längserstreckung des Flanschprofils (1) verlaufenden, in das Innere des Hohlprofils hinein bis an die Außenwandung (5) des zweiten L-Schenkels (3) heran ragenden Wulstfalz (9) aufweist, der die Wandung des Luftkanalabschnitts bei ihrem Einstecken in die Einstecktasche führt und einen Scheitel (14) aufweist.

5. Flanschprofil nach Anspruch 3 oder 4, **dadurch gekennzeichnet, dass** an der Innenwandung (6) des ersten L-Schenkels (2) im Bereich der Einstecköffnung (10) der Einstecktasche eine in das Innere des Luftkanals ragende Sicke (12) ausgebildet ist, die den Dichtmittelstrang (11) zumindest teilweise aufnimmt.

6. Flanschprofil (1) nach einem der Ansprüche 3 bis 5, **dadurch gekennzeichnet, dass** der Dichtmittelstrang (11) durch Einstecken der Wandung des Luftkanalabschnittes in die Einstecktasche teilbar ist, in der Weise, dass ein Teil des Dichtmittels in den Spalt zwischen der Innenwandung (6) des ersten L-Schenkels (2) und der Wandung des Luftkanalabschnitts und ein anderer Teil des Dichtmittels in den Spalt zwischen der Außenwandung (4) des ersten L-Schenkels (2) und der Wandung des Luftkanalabschnittes gepresst wird, wobei diese Teile des Dichtmittels die jeweilige Spalte zumindest teilweise ausfüllen.

7. Flanschprofil (1) nach einem der Ansprüche 3 bis 6, **dadurch gekennzeichnet, dass** bei Einstecken der Wandung des Luftkanalabschnittes in die Einstecktasche ein Teil des Dichtmittels des Dichtmittelstrangs (11) die Wandung des Luftkanalabschnitts benetzt, in der Weise, dass sich ein Dichtmittelfilm um die in der Einstecktasche befindliche Wandung des Luftkanalabschnitts herum legt.

8. Flanschprofil (1) nach einem der Ansprüche 3 bis 7, **dadurch gekennzeichnet, dass** das Dichtmittel des Dichtmittelstranges (11) klebend ist

9. Flanschprofil (1) nach einem der Ansprüche 4 bis 8, **dadurch gekennzeichnet, dass** die Außenwandung (5) des zweiten L-Schenkels (3) im Übergangsbereich zu der Außenwandung (4) des ersten L-Schenkels (2) einen Zwischenabschnitt (13) mit zu dem Wulstfalz (9) komplementärer, nach außen gewölbter und gerundeter Form hat, wobei das Flanschprofil (1) nach dem Verbinden mit einer in die Einstecktasche eingesteckten Wandung des Luftkanalabschnittes in der Weise verformt ist, dass der Scheitel (14) des Wulstfalzes (9) an die Außenwandung (5) des zweiten L-Schenkels (3) im Bereich des Zwischenabschnittes (13) flächig angepresst wird.

10. Flanschprofil (1) nach einem der Ansprüche 4 bis 9, **dadurch gekennzeichnet, dass** in dem Hohlraum des Flanschprofils (1) ein entlang der Längserstreckung des Flanschprofils (1) verlaufender, im Inneren der Einstecktasche im Bereich des Scheitels (14) des Wulstfalzes (9) angeordneter weiterer Dichtmittelstrang (16) vorhanden ist.

11. Flanschprofil (1) nach Anspruch 10, **dadurch gekennzeichnet, dass** an der Innenwandung (6) des ersten L-Schenkels (2) auf Höhe des Scheitels (14) des Wulstfalzes (9) eine in das Innere des Luftkanals ragende Sicke (15) ausgebildet ist, die den weiteren Dichtmittelstrang (16) zumindest teilweise aufnimmt.

12. Flanschprofil (1) nach Anspruch 10 oder 11, **dadurch gekennzeichnet, dass** der weitere Dichtmittelstrang (16) durch Einstecken der Wandung des Luftkanalabschnittes in die Einstecktasche teilbar ist, in der Weise, dass ein Teil des Dichtmittels in den Spalt zwischen dem Scheitel (14) des Wulstfalzes (9), der Außenwandung (5) des zweiten L-Schenkels (3) und der Wandung des Luftkanalabschnittes gepresst wird und ein anderer Teil des Dichtmittels den Spalt zwischen der Wandung des Luftkanalabschnittes und der Innenwandung (6) des ersten L-Schenkels (2) zumindest teilweise ausfüllt.

13. Flanschprofil (1) nach einem der Ansprüche 10 bis 12, **dadurch gekennzeichnet, dass** das Dichtmittel des Dichtmittelstranges (16) klebend ist.

14. Verbindungssystem zum luftdichten Verbinden von zwei Luftkanalabschnitten eines im Querschnitt polygonal, insbesondere rechteckig, ausgebildeten Luftkanals, mit Flanschprofilen (1), die endseitig an den Wandungen der Luftkanalabschnitte befestigbar sind, und mit in die Flanschprofile (1) einsetzbaren Eckwinkelstücken (17) zum gegenseitigen Verbinden der Flanschprofile (1) an den Ecken des Luftkanals,
**dadurch gekennzeichnet, dass** die Flanschprofile (1) nach einem der vorhergehenden Ansprüche ausgebildet sind.

15. Luftkanal mit mehreren über Flanschprofile (1) miteinander verbundenen Luftkanalabschnitten,
**dadurch gekennzeichnet, dass** wenigstens ein Flanschprofil (1) nach einem der Ansprüche 1 bis 13 ausgebildet ist.

## Claims

1. Flange profile (1) for air-tight connection of two air duct sections of an air duct configured in its cross-section essentially as an L-shaped hollow profile made of a folded metal sheet, wherein
- the L-shaped legs (2, 3) of the said flange profile (1) are configured with double walls each having an inner wall (4, 5) and an outer wall (6, 7),
- the walls (4, 6) of the first L-shaped leg (2) form an end-side open insertion pocket for insertion of the wall of one of the air duct sections,
- the walls (5, 7) of the second L-shaped leg (3) forming a take-up compartment (8) to take-up one leg of an angular corner piece,
**characterized in that** at least one crimp (17) is configured at the inner wall (7) of the second L-shaped leg (3), said crimp extending in the longitudinal extension of the flange profile (1) and protruding away from the take-up compartment (8).

2. Flange profile according to claim 1, **characterized in that** the crimp (17) is acute in its cross-section.

3. Flange profile (1) according to claim 1 or 2, **characterized in that** between the walls (4, 6) of the first L-leg (2) along the longitudinal extension of the flange profile (1) extending inside the insertion pocket in the region of of the insertion aperture (10) of the insertion pocket an arranged sealing agent strand (11) is present.

4. Flange profile according to any of the preceding claims, **characterized in that** the second L-shaped leg (3) at its inner wall (7) facing the partition joint between the air duct sections has a beaded fold (9) extending along the longitudinal extension of the flange profile (1) into the interior of the hollow profile and reaching up to the outer wall (5) of the second L-shaped leg (3), said beaded fold guiding the wall of the air duct section on its insertion into the insertion pocket and having a crest (14).

5. Flange profile according to claim 3 or 4, **characterized in that** a crimp (12) protruding into the interior of the air duct is configured at the inner wall (6) of the first L-shaped leg (2) in the area of the insertion aperture (10) of the insertion pocket, said crimp at least partly taking-up the sealing agent strand (11).

6. Flange profile (1) according to any of the preceding claims 3 to 5, **characterized in that** the sealing agent strand (11) can be parted by inserting the wall of the air duct section into the insertion pocket, i.e. in such a manner that part of the sealing agent is pressed into the gap between the inner wall (6) of the first L-shaped leg (2) and the wall of the air duct section and that another part of the sealing agent is pressed into the gap between the outer wall (4) of the first L-shaped leg (2) and the wall of the air duct section, these parts of the sealing agent at least partly filling the relevant gaps.

7. Flange profile (1) according to any of the preceding claims 3 to 6, **characterized in that** on insertion of the wall of the air duct section into the insertion pocket, part of the sealing agent of the sealing agent strand (11) moistens the wall of the air duct section in such a manner that a sealing agent film is laid around the air duct section wall existing in the insertion pocket.

8. Flange profile (1) according to any of the preceding claims 3 to 7, **characterized in that** the sealing agent of the sealing agent strand (11) is adhesive.

9. Flange profile (1) according to any of the preceding claims 4 to 8, **characterized in that** the outer wall (5) of the second L-shaped leg (3) in the transitional area towards the outer wall (4) of the first L-shaped leg (2) is comprised of an intermediate section (13) having an outwardly bulged and rounded shape which is complementary to the beaded fold (9), wherein the flange profile (1) is deformed in such a manner after connecting it with an air duct section wall inserted into the insertion pocket that the crest (14) of the beaded fold (9) is planar pressed to the outer wall (5) of the second L-shaped leg (3) in the area of the intermediate section (13).

10. Flange profile (1) according to any of the preceding claims 4 to 9, **characterized in that** a further sealing agent strand (16) extending along the longitudinal extension of the flange profile (1) and arranged in the interior of the insertion pocket in the area of the crest (14) of the beaded fold (9) is provided in the hollow space of the flange profile (1).

11. Flange profile (1) according to claim 10, **characterized in that** a crimp (15) protruding into the interior of the air duct is configured at the inner wall (6) of the first L-shaped leg (2) at the level of the crest (14) of the beaded fold (9) which at least partly takes-up the further sealing agent strand (16).

12. Flange profile (1) according to claim 10 or 11, **characterized in that** the further sealing agent strand (16) can be parted by inserting the wall of the air duct section into the insertion pocket, i.e. in such a manner that part of the sealing agent is pressed into the gap between the crest (14) of the beaded fold (9), the outer wall (5) of the second L-shaped leg (3) and the wall of the air duct section whereas another part of the sealing agent at least partly fills the gap between the wall of the air duct section and the inner wall (6) of the first L-shaped leg (2).

13. Flange profile (1) according to any one of the preceding claims 10 to 12, **characterized in that** the sealing agent of the sealing agent strand (16) is adhesive.

14. Connecting system (16) for air-tight connection of two air duct sections of a cross-sectionally polygonal, particularly rectangular configured air duct with flange profiles (1) attachable at the end side to the walls of the said air duct sections, and with angular corner pieces (17) that can be inserted into the flange profiles (1) for reciprocal connection of the flange profiles (1) at the corners of the air duct,
**characterized in that** the flange profiles (1) are configured in accordance with any of the preceding claims.

15. Air duct comprised of several air duct sections connected via flange profiles (1) to each other,
**characterized in that** the at least one flange profile (1) is configured in accordance with any of the preceding claims 1 to 13.

## Revendications

1. Bride profilée (1) pour raccorder de manière étanche à l'air deux segments de canalisation d'air d'une canalisation d'air, laquelle est réalisée en tôle pliée sous forme de profilé creux de section transversale essentiellement en forme de L,
- les branches du L (2, 3) de la bride profilée (1) étant réalisées avec une double paroi et présentant à chaque fois une paroi interne (4, 5) et une paroi externe (6, 7),
- les parois (4, 6) de la première branche du L (2) formant une cavité d'enfichage ouverte du côté de l'extrémité, pour l'enfichage de la paroi de l'un des segments de canalisation d'air,
- les parois (5, 7) de la deuxième branche du L (3) formant une chambre de réception (8) pour recevoir une branche d'une pièce d'angle de coin,
**caractérisée en ce**
**qu'**au moins une moulure (17) est réalisée au niveau de la paroi intérieure (7) de la deuxième branche du L (3), laquelle s'étend dans l'étendue longitudinale de la bride profilée (1) et s'éloigne de la chambre de réception (8).

2. Bride profilée (1) selon la revendication 1,
**caractérisée en ce que** la moulure (17) est réalisée sous forme pointue en section transversale.

3. Bride profilée (1) selon la revendication 1 ou 2,
**caractérisée en ce qu'**entre les parois (4, 6) de la première branche du L (2) est prévu un boudin d'agent d'étanchéité (11) s'étendant le long d'une étendue longitudinale de la bride profilée (1), disposé à l'intérieur de la cavité d'enfichage dans la région de l'ouverture d'enfichage (10) de la cavité d'enfichage.

4. Bride profilée selon l'une quelconque des revendications précédentes, **caractérisée en ce que** la deuxième branche du L (3) présente, au niveau de sa paroi intérieure (7) tournée vers le joint de séparation entre les segments de canalisation d'air, un pli de bourrelet (9) s'étendant le long de l'étendue longitudinale de la bride profilée (1), faisant saillie à l'intérieur du profilé creux jusqu'à la paroi extérieure (5) de la deuxième branche du L (3), lequel conduit la paroi du segment de canalisation d'air lors de son enfichage dans la cavité d'enfichage et présente un sommet (14).

5. Bride profilée selon la revendication 3 ou 4,
**caractérisée en ce qu'**une moulure (12) pénétrant à l'intérieur de la canalisation d'air est réalisée au niveau de la paroi intérieure (6) de la première branche du L (2) dans la région de l'ouverture d'enfichage (10) de la cavité d'enfichage, laquelle reçoit au moins en partie le boudin d'agent d'étanchéité (11).

6. Bride profilée (1) selon l'une quelconque des revendications 3 à 5, **caractérisée en ce que** le boudin d'agent d'étanchéité (11), par enfichage de la paroi du segment de canalisation d'air dans la cavité d'enfichage, peut être divisé de telle sorte qu'une partie de l'agent d'étanchéité soit pressée dans la fente entre la paroi intérieure (6) de la première branche du L (2) et la paroi du segment de canalisation d'air, et qu'une autre partie de l'agent d'étanchéité soit pressée dans la fente entre la paroi extérieure (4) de la première branche du L (2) et la paroi du segment de canalisation d'air, ces parties de l'agent d'étanchéité remplissant au moins en partie la fente respective.

7. Bride profilée (1) selon l'une quelconque des revendications 3 à 6, **caractérisée en ce que** lors de l'enfichage de la paroi du segment de canalisation d'air dans la cavité d'enfichage, une partie de l'agent d'étanchéité du boudin d'agent d'étanchéité (11) mouille la paroi du segment de canalisation d'air de telle sorte qu'un film d'agent d'étanchéité vienne se placer autour de la paroi du segment de canalisation d'air se trouvant dans la cavité d'enfichage.

8. Bride profilée (1) selon l'une quelconque des revendications 3 à 7, **caractérisée en ce que** l'agent d'étanchéité du boudin d'agent d'étanchéité (11) est collant.

9. Bride profilée (1) selon l'une quelconque des revendications 4 à 8, **caractérisée en ce que** la paroi extérieure (5) de la deuxième branche du L (3), dans la région de transition à la paroi extérieure (4) de la première branche du L (2), présente un segment intermédiaire (13) ayant une forme complémentaire au pli de bourrelet (9), cintrée vers l'extérieur et arrondie, la bride profilée (1), après son raccordement à une paroi du segment de canalisation d'air enfichée dans la cavité d'enfichage, étant déformée de telle sorte que le sommet (14) du pli de bourrelet (9) soit pressé à plat contre la paroi extérieure (5) de la deuxième branche du L (3) dans la région du segment intermédiaire (13).

10. Bride profilée (1) selon l'une quelconque des revendications 4 à 9, **caractérisée en ce que** dans la cavité de la bride profilée (1) est prévu un boudin d'agent d'étanchéité supplémentaire (16) s'étendant le long de l'étendue longitudinale de la bride profilée (1), disposé à l'intérieur de la cavité d'enfichage dans la région du sommet (14) du pli de bourrelet (9).

11. Bride profilée (1) selon la revendication 10,
**caractérisée en ce qu'**une moulure (15) pénétrant à l'intérieur de la canalisation d'air est réalisée au niveau de la paroi intérieure (6) de la première branche du L (2) à la hauteur du sommet (14) du pli de bourrelet (9), laquelle reçoit au moins en partie le boudin d'agent d'étanchéité supplémentaire (16).

12. Bride profilée (1) selon la revendication 10 ou 11, **caractérisée en ce que** le boudin d'agent d'étanchéité supplémentaire (16) peut être divisé par enfichage de la paroi du segment de canalisation d'air dans la cavité d'enfichage, de telle sorte qu'une partie de l'agent d'étanchéité soit pressée dans la fente entre le sommet (14) du pli de bourrelet (9), la paroi extérieure (5) de la deuxième branche du L (3) et la paroi du segment de canalisation d'air et qu'une autre partie de l'agent d'étanchéité remplisse au moins en partie la fente entre la paroi du segment de canalisation d'air et la paroi intérieure (6) de la première branche du L (2).

13. Bride profilée (1) selon l'une quelconque des revendications 10 à 12, **caractérisée en ce que** l'agent d'étanchéité du boudin d'agent d'étanchéité (16) est collant.

14. Système de raccordement pour le raccordement étanche à l'air de deux segments de canalisation d'air d'une canalisation d'air réalisée sous forme polygonale, en particulier rectangulaire en section transversale, avec des brides profilées (1) qui peuvent être fixées du côté de l'extrémité aux parois des segments de canalisation d'air et avec des pièces d'angle de coin (17) pouvant être insérées dans les brides profilées (1) pour le raccordement mutuel des brides profilées (1) aux coins de la canalisation d'air,
**caractérisé en ce que**
les brides profilées (1) sont réalisées selon l'une quelconque des revendications précédentes.

15. Canalisation d'air comprenant plusieurs segments de canalisation d'air raccordés les uns aux autres par le biais de brides profilées (1),
**caractérisée en ce**
**qu'**au moins une bride profilée (1) est réalisée selon l'une quelconque des revendications 1 à 13.
